Europäisches Patentamt

European Patent Office

Office européen des brevets

(11) Publication number: **0 463 600 B1**

# EUROPEAN PATENT SPECIFICATION

(45) Date of publication of patent specification: **20.12.95**  (51) Int. Cl.⁶: **G01J 3/36**

(21) Application number: **91110401.6**

(22) Date of filing: **24.06.91**

(54) **Method of spectral measurement**

(30) Priority: **22.06.90 JP 164702/90**
**28.08.90 JP 227058/90**

(43) Date of publication of application:
**02.01.92 Bulletin 92/01**

(45) Publication of the grant of the patent:
**20.12.95 Bulletin 95/51**

(84) Designated Contracting States:
**DE FR GB**

(56) References cited:
**US-A- 4 669 880**
**US-A- 4 692 883**

**PATENT ABSTRACTS OF JAPAN, vol. 12, no.
303 (P-746) (3150), 18 August 1988; & JP-
A-63075523**

(73) Proprietor: **MATSUSHITA ELECTRIC INDUSTRI-
AL CO., LTD.**
**1006, Ohaza Kadoma**
**Kadoma-shi,**
**Osaka-fu, 571 (JP)**

(72) Inventor: **Okubo, Kazuaki**
**3-15-1-208, Miyato-cho**
**Takatsuki-shi,**
**Osaka 569 (JP)**

(74) Representative: **Eisenführ, Speiser & Partner**
**Martinistrasse 24**
**D-28195 Bremen (DE)**

## Description

The present invention relates to a method for measuring the spectral distribution of a light source color or an object color, which can be used to evaluate an effective quantity for spectra, such as color or color rendering of light source or colorimetry of object color.

When spectral measurement is used for evaluating the energy of light source, color and color rendering, and for measuring an object light, it is important to improve the precision of an energy integral in the measurement than the wavelength resolution of spectra. In other words, it is a problem how to measure precisely the energy intensity of radiations at suitable wavelength sections than how to measure a detailed shape of wavelength distribution. This can be solved by making the spectral half-bandwidth correspond to the wavelength sampling intervals used for the measurement.

In a prior art monochromer of dispersion element drive type such as a prism monochromer, the dispersion curve agrees with the wavelength scale. Then, the measurement is performed with use of equivalent intervals of a feed of the mechanical width, wherein it is assumed that the differences in dispersion at adjacent wavelength positions to be measured do not change largely each other though the magnitude of linear dispersion varies largely between short and long wavelength portions. Further, in the diffraction grating monochromer of dispersion element drive type, the dispersion curve is independent of the wavelength scale because a sign bar mechanism is used. However, the dispersion of the diffraction grating monochromer is rather linear when compared with that of the prism and it is difficult to adjust the slit width mechanically in accordance with a change in dispersion during a spectral measurement. Therefore, spectral measurement is performed by neglecting the change in dispersion.

It is a problem that the above-mentioned monochromer of dispersion element drive type needs a long time for measurement. Recently, a new spectroradiometer constructed by combining a spectral dispersion optical system and a linear photosensor array becomes available which can measure optical spectra of an object in a short time. However, the mechanical intervals of the photosensor elements which corresponds to measured sampling intervals are independent of the dispersion. Therefore, the nonlinearity of dispersion on the surface on the photosensor element array is large, and the spectral half-bandwidths and the measured wavelength sampling intervals do not agree with each other. Then, the precision of center-of-gravity wavelengths or the precision of wavelength scale is important.

In general, as explained above, wavelength calibration is necessary due to the deviation from the theoretical wavelength in wavelength scale. Previously, in this kind of apparatus, only one wavelength around the center of the wavelength range to be measured is calibrated with a line spectrum or the like, and the center-of-gravity wavelengths of each photosensor element are set by assuming that the intervals of each element are equal to each other. Then, the wavelength sampling intervals deviate so that errors of measurement are large to be used for example for colorimetry. Further, when a plurality of line spectra emitted from a discharge lamp are introduced to a spectroradiometer for calibration at each wavelength position, radiations from the discharge lamp other than those used for calibration or fluctuations of the output of photosensor array are recognized erroneously as the wavelengths of line spectra to be used for calibration.

Further, as explained above, in a spectroradiometer constructed by combining a spectral dispersion optical system and a photosensor element array, the mechanical intervals of the photosensor elements which corresponds to measured sampling intervals are independent of the dispersion. Therefore, the nonlinearity of dispersion on the plane of the linear photosensor array is large and the half-bandwidth of responsivity function (slit function) and the measured wavelength sampling interval do not agree with each other. Thus, the measured center-of-gravity wavelengths deviate from the theoretical center-of-gravity wavelengths to cause mismatching of wavelength. Then, errors are large in a spectral measurement to evaluate the energy, color and color rendering of light source or to measure an object color.

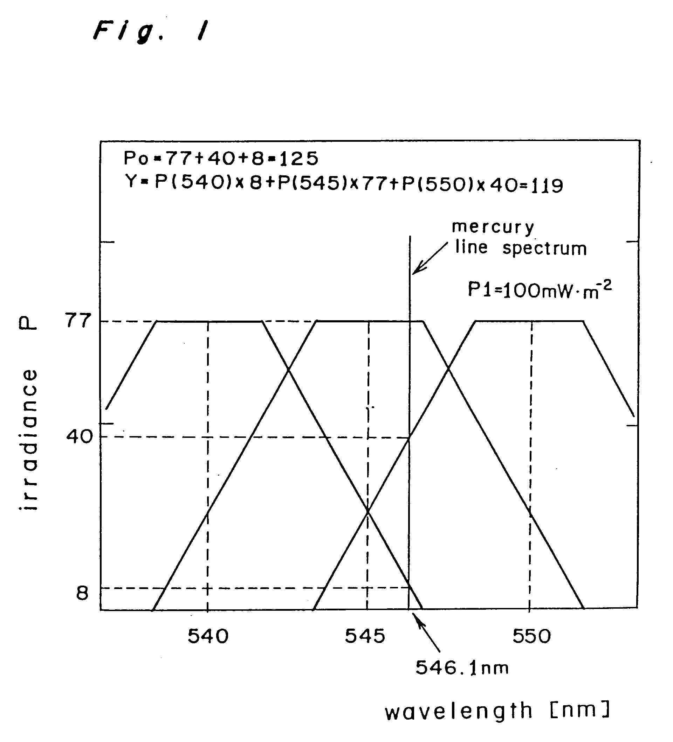

As an example, a mercury line spectrum of 546.1 nm of 100 $mW/cm^{-2}$ is measured when the wavelength half-bandwidths of responsivity function of the monochromer do not agree with the measured wavelength intervals. As shown in Fig. 1, the responsivity function becomes a trapezoid of 9 nm half-bandwidth if the wavelength width of exit slit is set as 9 nm against 5 nm of the wavelength sampling intervals and 5 nm of the wavelength width of entrance slit. (The scale of irradiance in Fig. 1 is normalized so that the responsivity function of the trapezoid becomes equal to the responsivity function of the above-mentioned ideal isosceles triangle.) Then, the measured values of the mercury line spectra at 546.1 nm wavelength of 100 $mW/cm^2$ are 8, 77 and 40 $mW/cm^2$ at the sampling wavelengths 540, 545 and 550 nm, respectively, and the measured value of irradiance of mercury line spectrum calculated by a weighed integration becomes 119 $mW/cm^2$ or the error is 19 % against the true value.

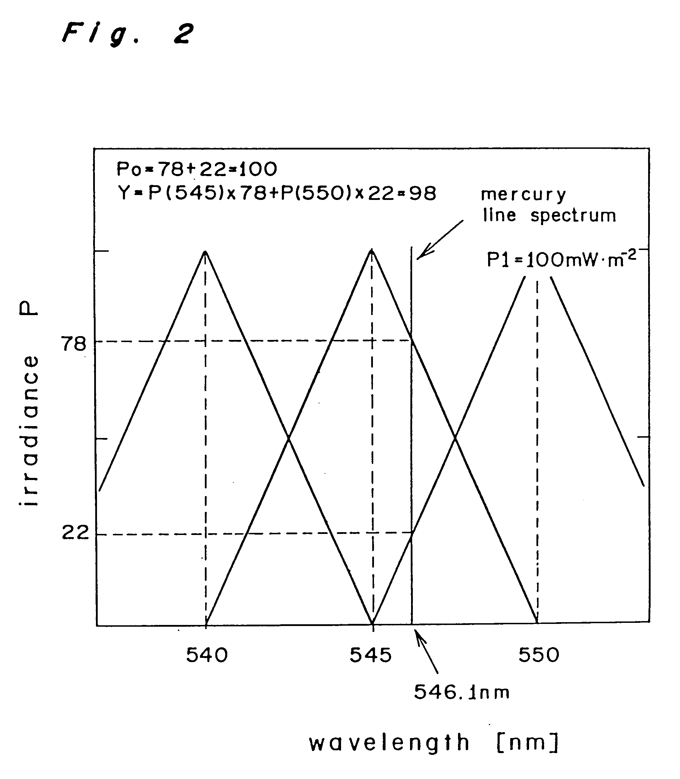

On the contrary, if the responsivity function of monochromer has a shape of ideal isosceles triangle, the above-mentioned weighed integration can be performed precisely by making the wavelength half-bandwidths of responsivity function agree with the wavelength sampling intervals. In the above-mentioned case, let us assume that a mercury line spectrum at 546.1 nm wavelength is measured when the wavelength half-bandwidth of responsivity function is set as 5 nm. Fig. 2 shows a responsivity function when the measured sampling wavelengths are 545 nm and 550 nm. That is, the wavelength half-bandwidths of responsivity function are set to be equal to the wavelength sampling intervals. If the energy P of the mercury line spectrum is taken as 100 mW/m$^2$, the measured values can be obtained from Eqs. (1) and (2):

$$P(545) = \frac{550 - 546.1}{550 - 545} \times 100 = 78, \quad [mW/m^2] \quad (1)$$

and

$$P(550) = \frac{546.1 - 545}{550 - 545} \times 100 = 22. \quad [mW/m^2] \quad (2)$$

Reversely, if P is estimated from the measurement values P(545) and P(550) by using mensuration by parts with use of the weight factor of triangle,

$$P = P(545) + P(550) = 100. [mW/m^2] \quad (3)$$

That is, if the responsivity function of monochromer has a shape of ideal isosceles triangle, the above-mentioned weighed integration can be performed precisely by making the half width of wavelength of responsivity function agrees with the wavelength sampling interval.

Further, it is also a problem to shorten a calculation time because the amount of calculation needed for energy integration with use of the measured values with use of the photosensor array is large for a prior art calculation procedure. In order to obtain an effective quantity such as illuminance and chromaticity, a convolution integration with a spectral function such as luminous efficacy curve or color matching function is performed. Because the above-mentioned spectroradiometer is utilized for spectroscopic analyses, it is designed primarily for observing spectroscopic profile with high wavelength resolution, and the wavelength sampling intervals and the half-bandwidths of the responsivity function are designed as narrow as possible. For example, if the visual wavelength range is measured with a photodiode linear array of 512 channels, the wavelength distances in the array are of the order of about 0.8 nm if we assume that there is no distortion of dispersion on the photosensor surface.

If the wavelength sampling intervals of such a spectral function do not agree with the measured wavelength sampling intervals, the matching between them has to be realized in the convolution integration. (For example, JIS Z8724-1983 defines that the color matching function is calculated with 5 nm of wavelength sampling intervals.) If we make the color matching function correspond with the center-of-gravity wavelengths of each photosensor element with use of interpolation, the convolution integration of 80 data and 80 data corresponds that of 512 data and 512 data under 5 nm of wavelength sampling intervals, so that the amount of calculation increases remarkably. For example, if the illuminance of a lamp is evaluated, such an integration has to be repeated at many wavelengths, for example for three primary colors, fifteen comparison colors and a standard wavelength.

Further, even if the resolution is improved, the precision of calculation can not be improved, as will be explained below. If the emission spectrum and the color matching of light source of spectral measurement are designated as E($\lambda$) and W($\lambda$), respectively, an effective quantity P such as a photometry quantity or tristimulus values is obtained by the following equation:

$$P = K \int_{-\infty}^{\infty} E(\lambda)W(\lambda)d\lambda, \quad (4)$$

wherein K is a constant. The sampling wavelength intervals of E(λ) have to be values which assure sufficient precision when the integration in Eq. (4) is performed. If the functions obtained by the Fourier transformation of E(λ) and W(λ) are designated as F(ω) and G(ω), respectively,

$$F(\omega) = \int_{-\infty}^{\infty} E(\lambda)e^{-j\omega\lambda}d\lambda, \tag{5}$$

and

$$G(\omega) = \int_{-\infty}^{\infty} W(\lambda)e^{-j\omega\lambda}d\lambda, \tag{6}$$

wherein ω is a space frequency of the inverse of λ. If we take that $\overline{F}(\omega)$ is the conjugate complex number of F(ω), Eq. (4) is transformed into the following equation:

$$\int_{-\infty}^{\infty} E(\lambda)W(\lambda)d\lambda = \frac{1}{2\pi} \int_{-\infty}^{\infty} \overline{F}(\omega)G(\omega)d\omega. \tag{7}$$

In Eq. (5), if high-frequency components of G(ω) attenuates to zero faster than those of F(ω), the definite integration completes at a limit $\omega_0$ even if F(ω) has any value at higher frequencies than $\omega_0$. That is, if the emission spectra E(λ) has any complex profile in Eq. (4), the high frequency components of W(λ) higher than the upper limit $\omega_0$ do not contribute to the weighed integration. Therefore, the maximum value h of the wavelength sampling intervals for performing the integration with a sufficient precision is given by the sampling theorem as follows:

$$h = 1/2\omega_0. \tag{8}$$

If the Fourier transformation of color matching functions X(λ), Y(λ) and Z(λ) to be used to obtain a light source color or an object color is performed in a wavelength range between 400 and 760 nm, the amplitude becomes $10^{-4}$ at the fortieth harmonic wave. If the value is taken as a practical conversion value, 5 nm of the wavelength sampling interval is sufficient for determining a light source color or an object color, and even if the calculation is performed with a better resolution, the precision can not be improved though the steps of the calculation increases. Therefore, in order to obtain an effect quantity efficiently from the measured data as mentioned above, it is necessary to convert the data with 0.8 nm of intervals into the of 5 nm of wavelength sampling interval with use of the band characteristic of isosceles triangle of 5 nm half-bandwidth wavelength.

Further, when the wavelength intervals for measurement are narrow, the light for the measurement becomes weak. Still further, if a light source such as a fluorescent lamp having both mercury line spectra and continuous spectra of fluorescent material is measured, the dynamic range of the measurement system has to be made wide. Therefore, these factors also contribute errors.

US-A-4,669,880 discloses a method of converting data of a measured bandwidth to data of a desired larger bandwidth. The method is performed on a spectrum which is detected by a linear array. The conversion method utilizes as weight factors the absolute value of the difference between the addresses of the centre wavelength pixel and the addresses of the added data pixels.

It is an object of the present invention to decrease measurement errors caused by the mismatching of wavelength sampling intervals of and effective curve with the spectral half-bandwidth.

In accordance with the invention, a method of spectral measurement, wherein the spectra of object light is measured with an optical system including a linear photosensor array and an effect quantity is obtained by a convolution integral of the obtained data and a spectral effect curve, comprises the steps of: measuring spectra data of object light with the linear photosensor array comprising a plurality of photosensor elements arranged at a wavelength sampling interval between photosensor elements, which wavelength sampling interval being larger from a wavelength half-bandwidth of responsivity function of each photosensor element, interpolating the measured spectral data of the photosensor elements to determine spectral

4

data at wavelengths with wavelength sampling intervals equal to the wavelength half-bandwidth of the responsivity function, and performing the convolution integration of the obtained interpolated data and a spectral effective curve to obtain the effect quantity.

A preferable improvement of the method according to claim 1 is defined in dependent claim 2.

It is an advantage of the present invention that energy integration can be performed precisely for spectral measurement.

It is another advantage of the present invention that calculations with use of measured values of optical spectra can be performed in a short time.

It is a further advantage of the present invention that the wavelength scale of a spectroradiometer can be calibrated automatically.

These and other objects and features of the present invention will become clear from the following description taken in conjunction with the preferred embodiments thereof with reference to the accompanying drawings throughout which like parts are designated by like reference numerals, and in which:

Fig. 1 is a diagram of a trapezoid characteristic of a mercury line spectrum of 546.07 nm;

Fig. 2 is a diagram of an isosceles characteristic of photosensor array for a mercury line spectrum of 546.07 nm;

Fig. 3 is a diagram of an optical system of a multi-channel spectroradiometer;

Fig. 4 is a graph of wavelength band characteristic of sensitivity of each element and the synthesized characteristic thereof around 550 nm wavelength in a multi-channel spectral measurement apparatus;

Fig. 5 is a diagram for displaying a conversion method to band characteristic $W_\lambda$ of sensitivity of center-of-gravity wavelength λnm and 5 nm half width of wavelength band;

Fig. 6 is a graph of responsivity function of measured values when a slit width is synthesized;

Fig. 7 is a graph of the deviation of the results from the reliable data measured by the accurate spectroradiometer which uses the mechanical wavelength scanning type double prism monochrometer;

Fig. 8 is a graph of responsivity function of each element and the synthesized characteristic thereof when the matching between the wavelength half-bandwidths of responsivity function of each element and wavelength widths (measured sampling intervals of wavelength) of each element; and

Fig. 9 is a graph of spectral data at positions of wavelength intervals equal to wavelength half-bandwidth of responsivity function of each element obtained with interpolation from spectral measurement data.

Embodiments of the present invention will be explained with reference to drawings.

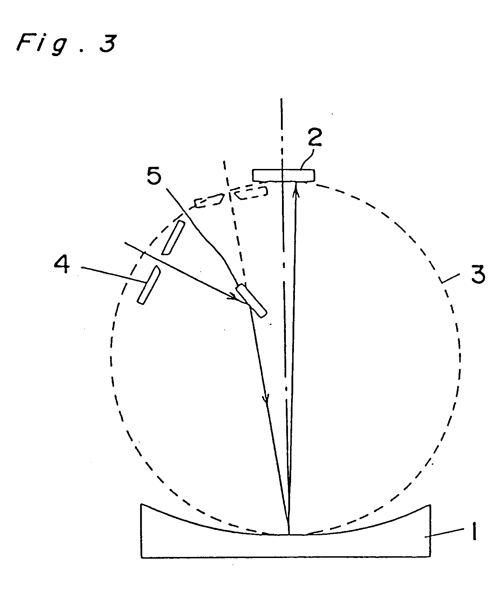

First, a spectroradiometer in combination of a concave diffraction grating and a photodiode linear array is explained. Fig. 3 shows an optical system of a multi-channel spectoradiometer including a concave diffraction grating 1 of 300 grooves/mm of groove density, 500 nm of blaze wavelength and 200 mm of focal distance (f) and a linear photosensor array 2 of silicon photodiodes (512 elements). A concave diffraction grating 1 has combined functions of a planar diffraction grating, a collimator mirror and a focusing mirror. If an entrance slit 4 of the concave diffraction grating 1 is provided on a circle (Rowland circle 3) having a diameter equal to the curvature diameter of the concave diffraction grating 1, a spectral dispersion image is focused on the Rowland circle 3. Therefore, a spectroradiometer can be constructed with use of the concave diffraction grating 1 more simply and compactly, and it is possible that a change in linear dispersion can be made relatively smaller.

In the multi-channel spectroradiometer shown in Fig. 3, a light from a light source or an object is introduced from an entrance slit 4 provided on the Rowland circle 3 at 11.8° of incident angle from the center normal line of the grating 1. In order to detect the diffracted light on the normal dispersion region of the concave diffraction grating 1, the detection region is determined to be an angular region wherein the diffraction angle $\beta$ between the center normal line and the diffracted light is set between -4.8° and +2°. Under the above-mentioned conditions, the wavelengths of the dispersion pattern are within 400 to 800 nm of wavelength on the Rowland circle. Because the linear dispersion is 0.0600 (mm/nm) on the center normal line and 0.0608 (mm/nm) at $\beta = -4.8°$, a change in linear dispersion in the detection region is 1.3 % or less between 400 and 800 nm. Then, if the center of the linear photosensor array 2 is set on the center normal line and on the Rowland circle 3, the wavelength intervals of the elements of the linear photosensor array 1 around the center of the linear photosensor array 2 is 0.054 : 0.06 = 0.9 nm owing to the value of linear dispersion at the position and the spacial interval (54 μm) of the elements.

Example 1

If a multi-channel spectroradiometer of the above-mentioned type shown in Fig. 3 is used for photometry and for colorimetry, the relation between the center-of-gravity wavelength of spectral responsivity of each photosensor element and the dispersion characteristic and the intervals (wavelength sampling intervals) of each photosensor element affect the precision of measurement.

When the entrance slit 4 is positioned on the Rowland circle 3, the diameter of the circle 3 coincides with the radius of curvature of the concave diffraction grating 1, and the dispersion pattern is focused on the Rowland circle 3. However, all of the photosensor elements of linear photosensor array 2 cannot be positioned on the curved surface of the Rowland circle 3, and they are aligned on a planar surface. Thus, the responsivity function (band characteristic of sensitivity) and the center-of-gravity wavelengths of each element of the linear photosensor array 2 depend largely on the wavelength, resulting in large errors in colorimetry or the like.

In order to obtain a precise energy integration from the spectral data, exact matching between the wavelength sampling intervals and the half-bandwidths has to be accomplished.

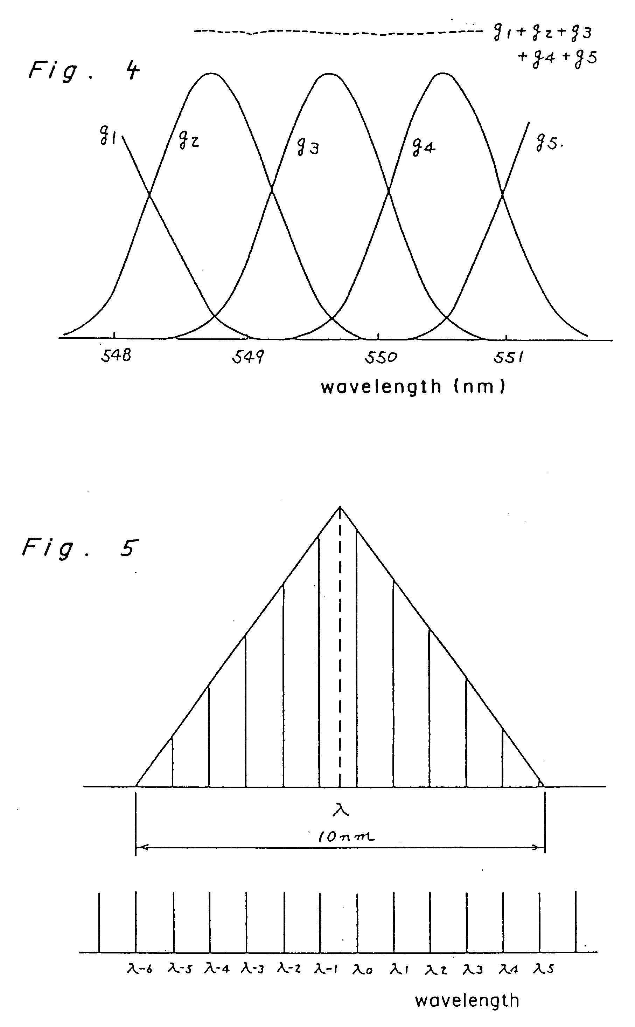

Fig. 4 shows the measured responsivity function of each element (responsivity function $g_1$, $g_2$, $\cdots$, $g_5$) and the synthesized characteristic thereof (synthesized responsivity function $g_1 + g_2 + g_3 + g_4 + g_5$) around 550 nm wavelength of a multi-channel optical measurement apparatus comprising a concave diffraction grating of 200 mm focal distance and 1/150 mm groove distance and a photodiode linear array 2 of 50 $\mu$m of element distance. The entrance slit 4 of the spectral measurement apparatus is set as 50 $\mu$m. The intervals between center-of-gravity wavelengths of each element are set about 0.9 nm, and the synthesized characteristic of responsivity functions of each element is found to have a nearly flat characteristic.

This means that whatever spectral distribution of a light source is, an exact energy evaluation can be done over the measured spectral relation. As shown in Fig. 2, if the wavelength half-bandwidths of responsivity function of isosceles triangle agree with the wavelength sampling intervals, the energy of a line spectrum can be measured without excess or lack by synthesizing the observed values at two spectral bands including the wavelength of the line spectrum. This is true irrespective of wavelength of line spectrum. That is, the synthesized value lies on a linear line connecting the apexes of the triangular bands, and the line is a locus of the measured value of the line spectrum when wavelength is changed under a constant energy. In other words, if the synthesized value becomes linear as shown in Fig. 4, the energy component at any wavelength can be evaluated without excess or lack. Therefore, the linearity of the synthesized value of each spectral band is a necessary condition in order to get a precise measured value with use of the isosceles triangular spectral bands. On the contrary, if the half-bandwidths of responsivity function do not agree with wavelength sampling intervals, the synthesized value does not become flat against wavelength, so that errors arise in a measurement

Fig. 5 displays a process for conversion to a responsivity function (synthesized responsivity function) $W_\lambda$ of $\lambda$ nm of the center-of-gravity wavelength and 5 nm of half-bandwidth of wavelength band. Only the elements which exist within the half-bandwidth 5 nm or satisfy the following relation contribute the synthesis of responsivity function:

$$|\lambda - \lambda_j| \leq 5. \tag{9}$$

In the case shown in Fig. 5, the center-of-gravity wavelengths of each element in the wavelength range of responsivity function $W_\lambda$ between $\lambda_{-6}$ and $\lambda_5$ around a central band of $\lambda_0$ including the wavelength $\lambda$ are taken into acount, and $W_\lambda$ is given by the following equation:

$$W_\lambda = \sum_{j=f}^{g} (5 - |\lambda - \lambda_j|) \, W_j/5, \tag{10}$$

wherein f = -6 and g = 5 and $W_j$ is the output of photosensor element at wavelength $\lambda_j$. In this process, the data $W_j$ measured at intervals about 0.9 nm smaller than the wavelength sampling intervals 5 nm of the spectral data are summed by using weight factors $(5 - |\lambda - \lambda_j|)/5$ determined as the difference of the absolute value of the difference between the measured center-of-gravity wavelength of the center element of the maximum output and a center-of-gravity wavelength of the spectral data to be obtained with the wavelength sampling intervals of the spectral data.

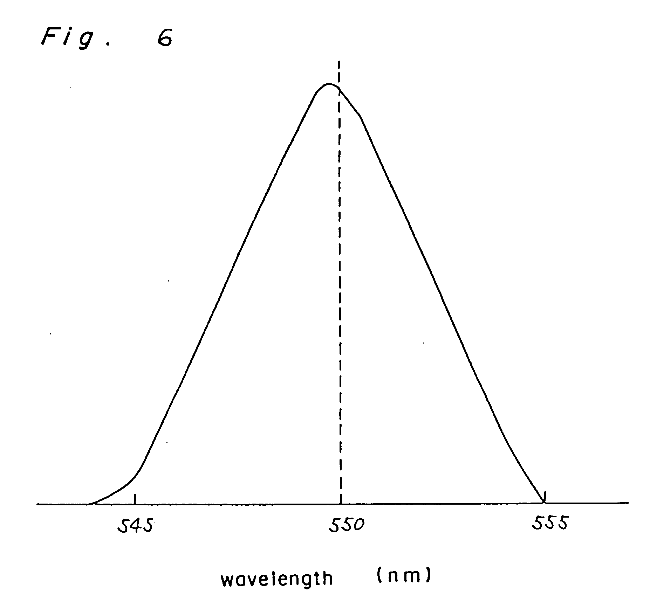

Fig. 6 shows a measured responsivity function when the slit width (wavelength range) is synthesized with the above-mentioned process. It is apparent that the isosceles triangle characteristic of 5 nm wavelength half-bandwidth can be realized.

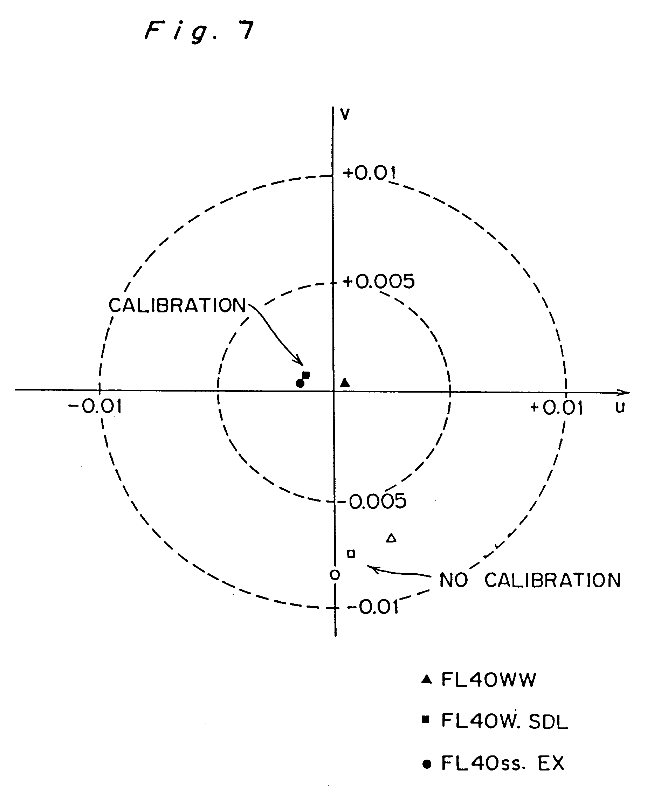

By using the above-mentioned multi-channel spectroradiometer, chromaticities of three types of fluorescent lamps (FL40WW, FL40W.SDL and FL40ss.EX) are measured. Fig. 7 shows the deviations of the measured chromaticities from those measured by an accurate spectroradiometer comprising a mechanical wavelength scanning type double prism monochrometer.

When the center-of-gravity wavelength of each elements are calibrated and the responsivity function synthesis is carried out, the measured results agree well with the reliable data obtained by the accurate spectroradiometer within ±0.0015 differences on a UCS color diagram. However, without the center-of-gravity wavelength calibration and the responsivity function synthesis, the results deviate from the reliable data by more than 0.006.

The results indicate that the center-of-gravity wavelength calibration and the responsivity function synthesizing process are good for error reduction in the above-mentioned multi-channel spectroradiometer.

Example 2

Next, a second embodiment of the present invention will be explained below.

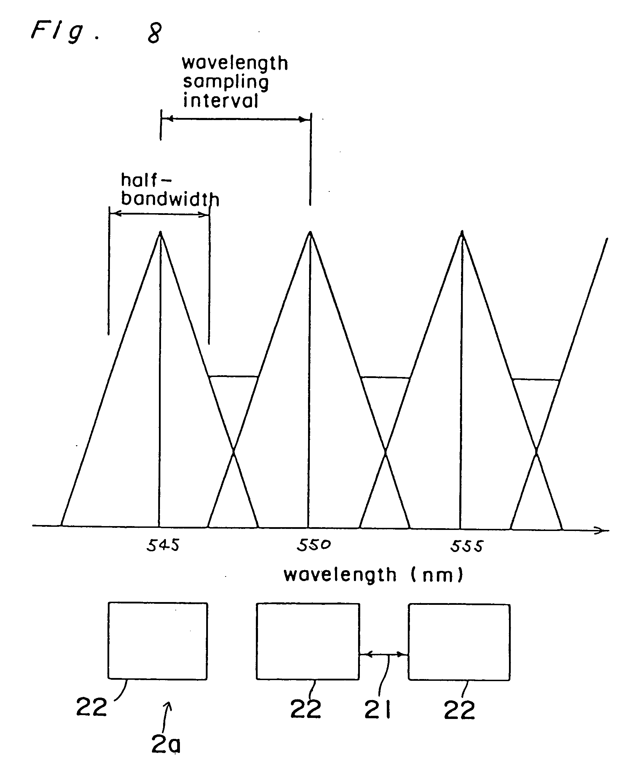

In the above-mentioned multi-channel spectral measurement apparatus in combination of a concave diffraction grating 1 and a linear photosensor array 2, if the widths of dead zone 21 between each element 22 become so large and can not be neglected against the widths of elements, the matching of the wavelength half-bandwidths of responsivity function of each element with the wavelength widths of each element (wavelength sampling intervals) becomes worse as shown in Fig. 8.

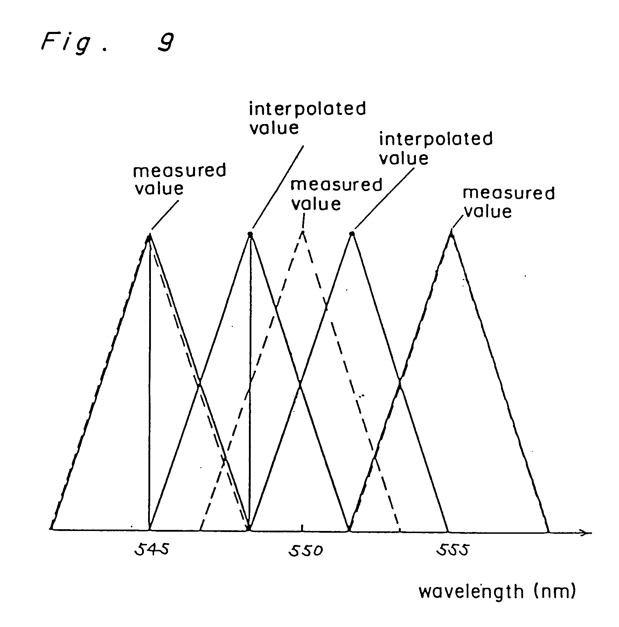

Then, as shown in Fig. 9, spectral data at positions having wavelength intervals equal to the wavelength half-bandwidth of responsivity function of each element is obtained by using interpolation from the measured spectral data around the center-of-gravity wavelength positions, for example with use of Lagrange's interpolation method. In a case shown in Fig. 9, if the isosceles triangle characteristic of 555 $\mu$m is taken as a data as it is, an interpolated value of the next frequency below 555 $\mu$m by the wavelength half-bandwidth does not correspond with 550 $\mu$m of adjacent sampling wavelength. Then, the spectral data at the interpolated frequency is obtained by the interpolation of the data at 555 and 550 $\mu$m. Therefore, spectral data can be matched with the wavelength half-bandwidth of responsivity function with the measured wavelength sampling intervals.

The matching between spectra data and wavelength intervals of data of spectral effect curve such as color matching can be realized further with the method explained in the first embodiment.

## Claims

1. A method of spectral measurement, wherein the spectrum of object light is measured with an optical system including a linear photosensor array and an effect quantity is obtained by a convolution integral of the obtained data and a spectral effect curve, comprising the steps of:

measuring spectral data of object light with the linear photosensor array comprising a plurality of photosensor elements arranged at a wavelength sampling interval between photosensor elements, which wavelength sampling interval being larger than the wavelength half-bandwidth of the responsivity function of each photosensor element;

interpolating the measured spectral data of the photosensor elements to determine spectral data at wavelengths with wavelength sampling intervals equal to the wavelength half-bandwidth of said responsivity function; and

performing the convolution integration of the obtained interpolated data and a spectral effective curve to obtain the effect quantity.

2. The method according to claim 1, wherein the step of measuring spectral data of each photoelectric element with the wavelength sampling interval comprises the steps of:

obtaining photoelectric outputs of the elements of the linear photosensor array, said elements being arranged at first wavelength sampling intervals; and

converting the photoelectric output data measured at the first wavelength sampling intervals to data of the effect quantity of second wavelength sampling intervals of the spectral data larger than the first wavelength sampling intervals by summing the output photoelectric data of the elements for each sampling point of the effect quantity with use of weight factors determined as the absolute value of the difference between the center-of-gravity wavelength at the sampling point of the spectral data and the center-of-gravity wavelengths of the elements.

EP 0 463 600 B1

**Patentansprüche**

1. Spektralmeßverfahren, bei dem das Spektrum von Objektlicht mit einem optischen System gemessen wird, das eine lineare Fotosensoranordnung enthält und bei dem eine Effektgröße durch ein Faltungsintegral der erlangten Daten und einer spektralen Effektkurve erhalten wird, das die Schritte umfaßt:
Messen von Spektraldaten des Objektlichtes mit der linearen Fotosensoranordnung, die eine Mehrzahl von Fotosensorelementen aufweist, die ein Wellenlängenabtastintervall voneinander entfernt angeordnet sind, wobei das Wellenlängenabtastintervall größer ist als die Wellenlängenhalbbandbreite der Ansprechempfindlichkeitsfunktionjedes Fotosensorelementes;
Interpolieren der gemessenen Spektraldaten der Fotosensorelemente zur Feststellung von Spektraldaten bei Wellenlängen, deren Wellenlängenabtastintervalle gleich der Wellenlängenhalbbandbreite der Ansprechempfindlichkeitsfunktion sind;
und
Durchführungen der Faltungsintegration der erhaltenen interpolierten Daten und einer spektralen Effektkurve, um die Effektgröße zu erhalten.

2. Verfahren nach Anspruch 1, bei dem der Schritt des Messens von Spektraldaten jedes fotoelektrischen Elementes mit dem Wellenlängenabtastintervall die Schritte enthält:
Erhalten der fotoelektrischen Ausgangsdaten der die linearen Fotosensoranordnung bildenden Elemente, die in ersten Wellenlängenabtastintervallen angeordnet sind;
und
Umwandeln der an den ersten Wellenlängenabtastintervallen gemessenen fotoelektrischen Ausgangsdaten in Daten der Effektgröße der zweiten Wellenlängenabtastintervalle der Spektraldaten, die größer sind als die ersten Wellenlängenabtastintervalle, durch Summieren der fotoelektrischen Ausgangsdaten der Elemente jedes Abtastpunktes der Effektgröße unter Verwendung von Gewichtungsfaktoren, die als Absolutwert der Differenz zwischen der Schwerpunktwellenlänge am Abtastpunkt der Spektraldaten und der Schwerpunktwellenlängen der Elemente bestimmt werden.

**Revendications**

1. Procédé de mesure spectrale, dans lequel le spectre d'une lumière objet est mesuré avec un système optique qui comprend une matrice linéaire de photocapteurs, et une quantité efficace est obtenue avec une intégrale de convolution des données obtenues et une courbe de l'effet spectral, comprenant les étapes suivantes :
la mesure des données de spectre de la lumière objet avec la matrice linéaire de photocapteurs qui comprend plusieurs éléments photocapteurs disposés avec un intervalle d'échantillonnage en longueur d'onde entre les éléments photocapteurs, l'intervalle d'échantillonnage en longueur d'onde étant supérieur à la demi-largeur de bande de longueurs d'onde de la fonction de sensibilité de chaque élément photocapteur,
l'interpolation des données spectrales mesurées des éléments photocapteurs pour la détermination des données spectrales à des longueurs d'onde avec des intervalles d'échantillonnage en longueur d'onde égaux à la demi-largeur de bande de longueurs d'onde de la fonction de sensibilité, et
l'exécution de l'intégration de convolution avec les données interpolées obtenues et une courbe spectrale efficace pour l'obtention de la quantité efficace.

2. Procédé selon la revendication 1, dans lequel l'étape de mesure des données de spectre de chaque élément photoélectrique avec un intervalle d'échantillonnage en longueur d'onde comprend les étapes suivantes :
l'obtention des signaux photoélectriques de sortie des éléments constitués d'une matrice linéaire de photocapteurs, les éléments étant placés à des premiers intervalles d'échantillonnage en longueur d'onde, et
la transformation des données photoélectriques de sortie mesurées aux premiers intervalles d'échantillonnage en longueur d'onde en données de quantité efficace de seconds intervalles d'échantillonnage en longueur d'onde de données spectrales qui sont plus grands que les premiers intervalles d'échantillonnage en longueur d'onde, par addition des données photoélectriques de sortie des éléments pour chaque point d'échantillonnage de la quantité efficace à l'aide de facteurs de pondération déterminés sous forme de la valeur absolue de la différence entre la longueur d'onde du centre de gravité au point d'échantillonnage des données spectrales et les longueurs d'onde du centre de gravité

8

des éléments.

# Fig. 1

Po = 77+40+8 = 125
Y = P(540)×8+P(545)×77+P(550)×40 = 119

mercury line spectrum

P1 = 100mW·m⁻²

irradiance P

77

40

8

540   545   550

546.1nm

wavelength [nm]

# Fig. 2

Po=78+22=100
Y=P(545)x78+P(550)x22=98

mercury
line spectrum

P1=100mW·m⁻²

irradiance P

78

22

540    545    550

546.1nm

wavelength [nm]

Fig . 3

Fig. 4

$$g_1 + g_2 + g_3 + g_4 + g_5$$

$g_1$ $g_2$ $g_3$ $g_4$ $g_5$

548     549     550     551

wavelength (nm)

Fig. 5

$\lambda$

10 nm

$\lambda_{-6}$ $\lambda_{-5}$ $\lambda_{-4}$ $\lambda_{-3}$ $\lambda_{-2}$ $\lambda_{-1}$ $\lambda_0$ $\lambda_1$ $\lambda_2$ $\lambda_3$ $\lambda_4$ $\lambda_5$

wavelength

Fig. 6

wavelength (nm)

*Fig. 7*

CALIBRATION

NO CALIBRATION

▲ FL40WW

■ FL40W. SDL

● FL40ss. EX

Fig. 8

Fig. 9